# EUROPÄISCHE PATENTANMELDUNG

(11) **EP 0 534 256 A1**
(43) Veröffentlichungstag der Anmeldung: **31.03.1993**
(21) Anmeldenummer: 92115643.6
(22) Anmeldetag: 12.09.1992
(51) Int. Cl.: D01H 11/00, B65G 45/18, B65G 45/22

(54) **Verfahren und Vorrichtung zum Reinigen des Riementriebs einer Textilmaschine, insbesondere Doppeldraht-Zwirnmaschine**

(30) Priorität: 26.09.1991 DE 4131987
(71) Anmelder: Palitex Project-Company GmbH, D-47804 Krefeld (DE)
(72) Erfinder: Junk, Paul B., Dr., W-4150 Krefeld 29 (DE); Scheufeld, Heinz, W-4051 Korschenbroich 1 (DE)
(74) Vertreter: Sroka, Peter-Christian, Dipl.-Ing.

(57) **Zusammenfassung**

Ein Verfahren zum Reinigen eines Riemenantriebs (2), der einer Textilmaschine, insbesondere Doppeldraht-Zwirnmaschine, zugeordnet ist und der Spann- bzw. Riemenandruckrollen (6) aufweist, ist dadurch gekennzeichnet, daß man bei laufendem Riemen mindestens die }ber die Spann- oder Andruckrollen (6) laufende Riemenseite mit einer Fl}ssigkeit befeuchtet, und/oder mechansich reinigt.

## Beschreibung

Für den Antrieb von Textilmaschinen mit einer Vielzahl gleicher Arbeitsstellen werden überwiegend Tangentialriemen eingesetzt. Der Riemen läuft in einen geschlossenen Oval um und treibt je nach Maschinenauslegung im Hin- wie auch im Rücktrum die Arbeitsstellen an. Die Arbeitsstellen selbst sind entweder Spindeln oder Spinnrotoren, gegen deren Amtriebsscheibe (Wirtel) der Antriebsriemen tangential zur Anlage kommt.

Um eine ausreichende Umschlingung der Antriebswirtel durch den Riemen sicherzustellen, werden Spann- oder Riemenandruckrollen verwendet.

In Textilbetrieben sind die Antriebsmittel, insbesondere Riementriebe, einen relativ hohen Staubeinfluß ausgesetzt, der neben den reinen Unweltstäuben im wesentlichen auch aus Flusen bzw. Faserpartikeln besteht. Tangentialriemen, deren Geschwindigkeiten im praktischen Betrieb zwischen 20 und 40 m/sec. Sekunde liegen, neigen aufgrund ihres konstruktiven Aufbaus und auch der wegen des hohen Reibwertes hochgradig haftfähigen Oberfläche zur Mitnahme der in der Luft befindlichen Staubbestandteile. Der Riemen selbst nimmt die Staubpartikel auf und gibt sie infolge seiner hohen Reibgeschwindigkeit gegenüber der umgebenden Luft und infolge von Zentrifugalkräften, z.B. bei den Umlenkstellen im Riemenoval, teilweise wieder ab. Auch auf die von den Riemen berührten Elemente werden Staubpartikel übertragen.

Der Spindelwirtel wird von den vom Riemen mitgeführten Staubpartikeln weniger beeinflußt, da zwischen Riemen und Wirtel eine Relativbewegung besteht. Der Antriebswirtel wird beim Abbremsen der Spindel stark verzögert und beim Spindelanlauf stark beschleunigt, so daß es bei beiden Phasen zu einer hohen Relativbewegung zwischen Antriebswirtel und Riemen kommt. Eine Staubabgabe an den Wirtel als bleibende Größe findet damit nur in vernachlässigbarem Umfang statt. Die Spann- bzw. Riemenandruckrolle ist hingegen gegenüber einer Staubabgabe durch den Riemen bzw. gegenüber einer Staubanhaftung weit anfälliger. Die Eigenleistung der Riemenandruckrolle ist vernachlässigbar klein, so daß die Relativbewegung zwischen Tangentialriemen und Riemenandruckrolle ebenso vernachlässigbar klein ist. Als Folge davon werden vom Riemen beträchtliche Staubpartikelmengen auf die Laufoberfläche der Riemenandruckrolle bzw. Spannrolle übertragen. Dort haften sie ihrerseits wieder an und führen je nach Staubangebot mehr oder weniger schnell zu einem sehr hartkrustigen Belag, der sehr unterschiedlich strukturiert ist, so daß er sich auf dem Rollenumfang in unterschiedlicher Stärke ablagert. Dieser Staubbelag ist teilweise glatt, teilweise aber auch offenporig, so daß eine sehr inhomogene Lauffläche der Riemenandruckrolle bzw. Spannrolle entsteht.

Aufgrund dieses inhomogenen Belages entsteht zwischen der Riemenlauffläche und der Rollenlauffläche im jeweiligen Berührungspunkt ein Zustand, der von sehr unterschiedlichen Schwingungen geprägt ist. Diese Schwingungen können eine nachteilige Rückwirkung auf die Rollenlagerung haben. Die durch die Schwingungen hervorgerufenen Pumpwirkungen äußern sich vornehmlich auch durch einen starken Anstieg des Lärmpegels.

Es besteht damit das grundsätzliche Problem, den Belag auf den Riemenandruckrollen bzw. Spannrollen zu beseitigen. Da eine derartige Reinigung manuell nur bei stehender Maschine möglich ist und außerden eine zeitraubende, sehr kostspielige Wartungsarbeit darstellt, müssen andere Wege gefunden werden, den Belag von der Rollenoberfläche wieder zu entfernen.

Erfindungsgemäß hat es sich überraschenderweise gezeigt, daß eine Befeuchtung der Riemenlauffläche, die über die Spann- bzw. Andruckrollen läuft, auch einen Wasch- bzw. Reinigungseffekt auf die Lauffläche der Andruck- bzw. Spannrolle zur Folge hat.

Die Befeuchtung des Riemens hängt hinsichtlich der Menge und der Zeit von den äußeren Gegebenheiten ab und wird entsprechend dem Verschmutzungsgrad der Spannrollenoberflächen gesteuert.

Eine Reinigung kann erfindungsgemäß auch dadurch bewirkt werden, daß man bei laufenden Riemen mindestens gegen die über die Spann- bzw. Andruckrollen laufende Riemenfläche ein mechanisches Reinigungselement zur Anlage bringt.

Infolge der Benetzung können an der Rollenoberfläche anhaftende, verkrustete Bestandteile gelöst werden und fallen teilweise direkt nach unten; diese losgelösten Bestandteile bzw. Schmutzpartikel können aber auch vom Riemen selbst wieder mitgenommen werden und weiter getragen werden, so daß diese losgelösten Schmutzpartikel wieder an folgenden Antriebselementen mit geringerem Verschmutzungsgrad abgelegt werden. Um dies zu verhindern, schließt sich erfindungsgemäß an die Reinigung durch Befeuchtung eine mechanische Riemenreinigung an, vorzugsweise in Form einer rotierend angetriebenen bzw. antreibbaren Putzbürste, die die Riemenoberfläche von den mitgeführten Schutzpartikeln befreit, die beispielsweise über eine Absaughaube oder dergleichen abgeleitet werden können.

Die Erfindung wird im folgenden anhand der Figuren näher beschrieben. Es zeigen:
Figur 1 teilweise in Schnitt eine perspektivische Teildarstellung eines Tamgemtialriemenamtriebs für Spindeln einer Zwirnmaschine mit zugeordnetem mechanischem Reinigungselement; gemäß einer ersten Ausführungsform der Erfindung;
Figur 2 eine schematische Schnittamsicht eines abgewandeltem mechanischen Reinigungselementes in Zuordnung zu einem Tangentialriemen;
Figuren 3 und 4 schematische Darstellungen einer einem Tangential- bzw. Flachriemen zugeordneten Befeuchtungseinrichtung;
Figuren 5 und 6 eine abgewandelte Ausführungsform einer Befeuchtungsvorrichtung;
Figur 7 eine schematisierte Gesamtdarstellung eines Riementriebs mit einer bevorzugten räumlichen Zuordnung von mechanischem Reinigungselement einerseits und Befeuchtungseinrichtung andrerseits.

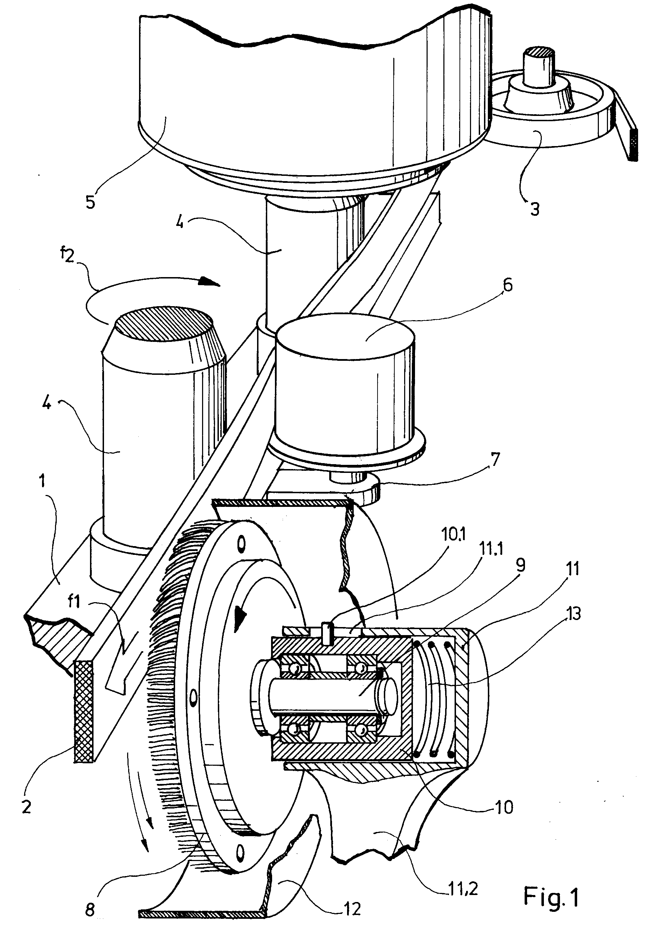

In Figur 1 ist ein Tangentialriemen 2 einer durch dem Spindelbalken 1 repräsentierten Doppeldraht-Zwirnmaschine dargestellt. Der um eine Umlenkscheibe 3 geführte, als Flachriemen ausgebildete Tangentialriemen 2 dient zum Antrieb von in dem Spindelbalken 1 gelagerten Spindelwirteln 4 von Doppeldraht-Zwirnspindeln, vom denen in Figur 1 eine durch den Ballonbegrenzermantel 5 repräsentiert ist. Jedem Spindelwirtel 4 ist eine Spann- bzw. Riemenandruckrolle 6 zugeordnet, die auf einem an dem Spindelbalken 1 befestigten Träger 7 frei drehbar gelagert ist. Der in Richtung des Pfeiles f1 laufende Flachriemem 2 treibt die Spimdelwirtel 4 in Richtung des Pfeiles f2 an.

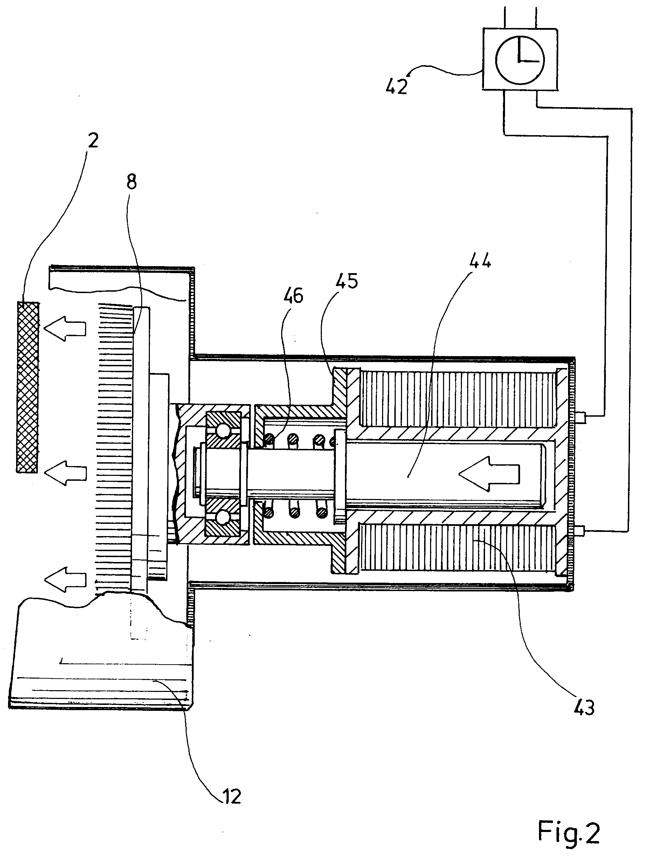

In den Figuren 1 und 2 ist ein gegen den Flachriemen 2 ansteilbares Reinigungselement in Form einer rotierend anteibbaren Bürste 8 dargestellt. Die in Fig. 2 dargestellte Bürste 8 wird von dem Riemen 2 selbst angetrieben und ist mit ihrem Achsstummel 9 drehbar in einem vom einer Druckfeder 13 belasteten Zylindertopf 10 gelagert. Der Zylindertopf 10 trägt einen in einem Schlitz 11.1 des Gehäuses 11 eingreifendem Stift 10.1 und ist damit gegen Drehung relativ zu dem Gehäuse 11 gesichert.

Die Bürste 8 ist vom einer am eine nicht dargestellte Saugluftquelle angeschlossenen Absaughaube 12 umgeben, um die Staub- bzw. Schmutzpartikel, die mittels der Bürste 8 von dem Flachriemen 2 abgelöst werden, abzusaugen.

Das Gehäuse 11 ist mittels eines Haltearms 11.2 im nicht dargestellter Weise an dem Maschinenrahmem befestigt.

Die durch dem Achsstummel 9 bestimmte Drehachse der Bürste 8 liegt außerhalb der Mittellinie des Flachriemens 2, so daß bei gegen den Riemen 2 anliegender Bürste 8 diese in Rotation versetzt wird. Die Bürste ist mittels der Feder 13 federnd gegen den Riemen 2 angestellt, so daß bei einem Verschleiß ein automatisches Nachstellen stattfindet.

Gemäß Fig. 2 wird eine intermittierend gegen den Riemen 2 anstellbare Bürste 8 verwendet, die im Sinne der Ausführungsform gemäß Fig. 1 von einer an eine Saugluftquelle anschließbaren Absaughaube 12 umgeben ist. Die Bürste (8) ist drehbar auf dem vorderen Ende einer Achse gelagert deren hinteres Ende 44 als Anker (Kern) eines Elektromagneten in eine an eine Stromquelle 42 angeschlossene Spule 43 eintaucht. Anker 44 und Spule 43 sind so aufeinander abgestimmt, daß durch Beaufschlagen der Spule 43 mit Strom der Anker 44 und damit die Bürste 8 gegen die Kraft einer in einem Gehäuse 45 untergebrachten Rückstellfeder (46) in Richtung der in Fig. 2 eingezeichneten Pfeile gegen dem Riemen 2 zur Anlage gebracht wird. Dieses intermittierende Anstellen der Bürste 8 gegen den Riemen 2 wird gesteuert in Abhängigkeit von dem Verschmutzungsgrad des Riemenantriebs oder in einen festen Zeittakt. Auch bei der Ausführungsform gemäß Figur 2 wird die Bürste 8 von dem Riemen 2 im Drehung versetzt; die Drehachse der Bürste 8 liegt zu diesem Zweck außerhalb der Mittellinie des Flachriemens 8.

Das intermittierende Anstellen der Bürste 8 gegen den Riemen 2 kann auch mittels einer hinsichtlich ihrer Wirkungsweise den Elektromagneten 43, 44 vergleichbaren, mit Druckluft beaufschlagbaren Kolben-Zylinder-Einheit erfolgen. Den Bürsten 8 gemäß den Figuren 1 und 2 kann erfindungsgemäß auch ein eigener Drehantrieb, z.B. im Form eines Elektro- oder Druckluftmotors zugeordnet sein.

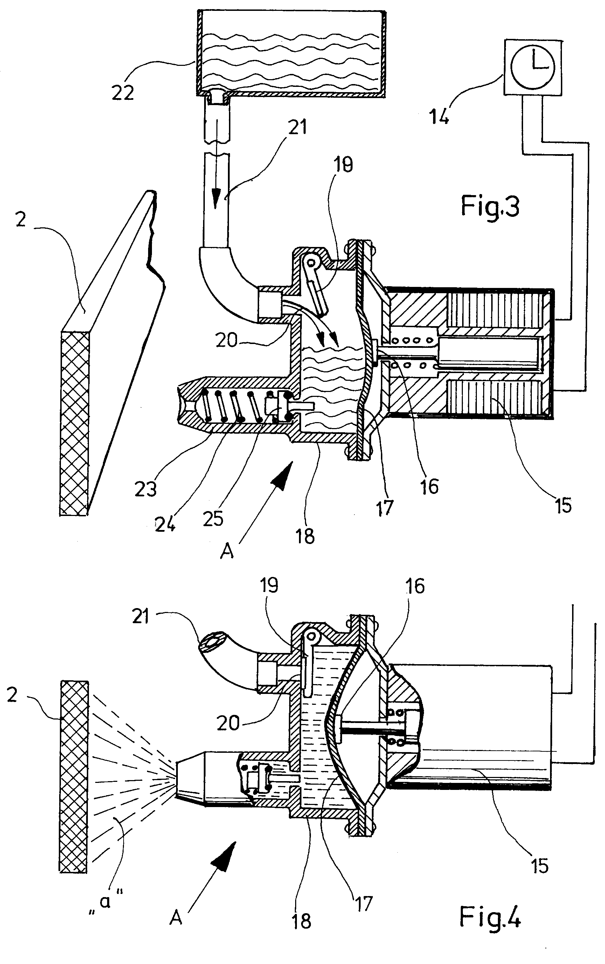

In den Figuren 3 und 4 ist eine erste Ausführungsform einer Benetzungs- bzw. Befeuchtungsvorrichtung A dargestellt. Die Benetzungsvorrichtung A enthält einen Elektromagneten 15, dessen freies Kolbenende 16 gegen eine Membran 17 anliegt, die die eine Begrenzungswand eines Flüssigkeitsbehälters 18 bildet. In den Behälter 18 mündet ein mittels eines Rückschlagventils 19 verschließbarer Flüssigkeitseinlaß 20, der über eine Schlauch- oder Rohrleitung 21 an einen Speicherbehälter 22 angeschlossen ist. An den Flüssigkeitsbehälter 18 ist eine Sprühdüse 23 angeschlossen, und die Verbindung zwischen dem Flüssigkeitsbehälter 18 und der Sprühdüse 23 wird im Ruhezustand durch einen mittels einer Feder 24 belasteten Ventilteller 25 unterbrochen.

In dem in Figur 3 dargestellten Ruhzustand, d.h. bei abgeschaltetem Elektromagneten 15, kann bei geöffnetem Rückschlagventil 19 Flüssigkeit, z.B. Netzmittel, im den Flüssigkeitsbehälter 18 machströman.

Wenn entsprechend einem z.B. durch eine Zeituhr 14 gegebenen Zeittakt der Elektromagnet 15 betätigt wird, drückt das freie Kolbenstangenende des Elektromagneten 15 die Membrane 17 in den Flüssigkeitsbehälter 18, wodurch das Rückschlagventil 19 entsprechend Figur 4 geschlossen und der Ventilteller 25 gegen die Kraft der Rückstellfeder 24 vom seinem Ventilsitz abgehoben wird. Dadurch kann in die Sprühdüse 23 eintretende Flüssigkeit als Sprühnebel a gegen den Flachriemen 2 gesprüht werden. Nach dem Abschalten des Elektromagneten 15 arbeiten die zuvor geschlossenen bzw. geöffneten Ventile in umgekehrter Reihenfolge, so daß der Flüssigkeitsbehälter 8 wiederum mit Flüssigkeit nachgefüllt wird. Die Anzahl der Reinigungs- bzw. Sprühzyklen richtet sich mach dem Grad der Verschmutzung einerseits des Flachriemens 2 und andererseits der Spann- bzw. Riemenandruckrollen 6.

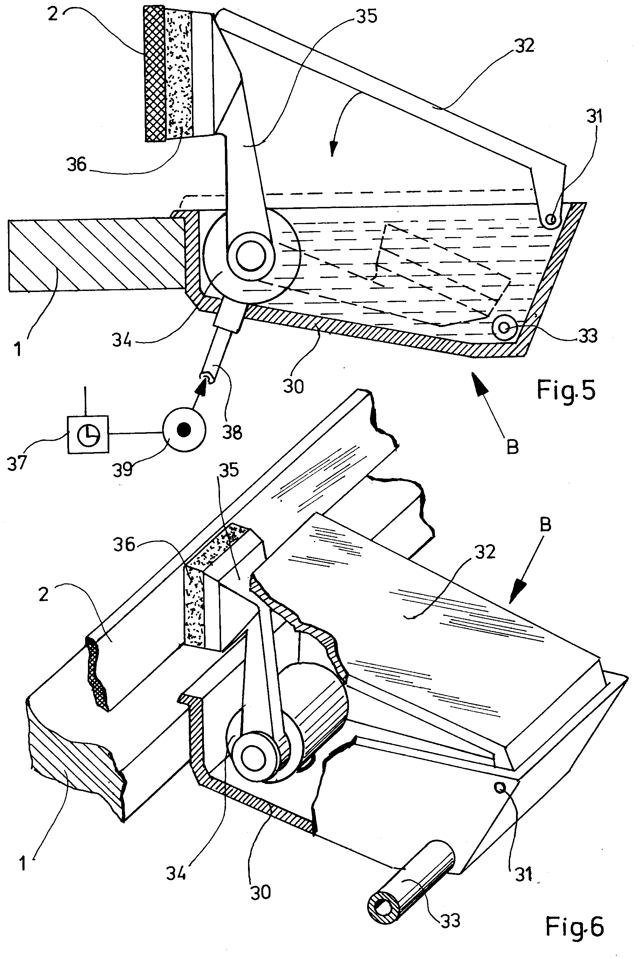

In den Figuren 5 und 6 ist eine zweite Ausführungsform einer Benetzungs- bzw. Befeuchtungsvorrichtung B schematisch dargestellt. Bei dieser Ausführungsform ist an dem Spindelbalken 1 ein Flüssigkeitsbehälter 30 befestigt, der im Ruhezustand von einem frei um die Achse 31 verschwenkbaren Deckel 32 verschlossen ist. In den Behälter 30 mündet ein Flüssigkeitszulauf 33.

In dem Behälter 30 ist ein mittels eines Drehzylinders 34 verschwenkbarer Schwenkarm 35 gelagert, der an seinem freien Ende ein Kissen 36 aus saugfähigem Material trägt. Der Drehzylinder 34 kann durch eine Leitung 38 mit einem Druckmedium beaufschlagt werden, um den Schwenkarm 35 zwischen den beiden in Figur 5 dargestellten Positionen zu verschwenken. Die Beaufschlagung des Drehzylinders 34 mit einem Druckmedium erfolgt, gesteuert durch die Zeituhr 37, mittels eines Pumpaggregates 39.

Bei Bedarf wird der Drehzylinder 34 mit Druckluft beaufschlagt, worauf der Schwenkarm 33 aus der in Figur 5 gestrichelt dargestellten Stellung bei gleichzeitigem Hochschwenken des Deckels 32 in die im vollen Linien dargestellte Stellung hochgeschwenkt wird, derart, daß das Kissen 36 gegen den Flachriemen 2 zur Anlage kommt. Die in dem Kissen 36 gespeicherte Flüssigkeit wird zumindest teilweise an die Oberfläche des Flachriemems 2 abgegeben. Nach einer ausreichenden Zeit wird die Druckmittelbeaufschlagung des Drehzylinders 34 unterbrochen, so daß der Schwenkarm 35 unter der Einfluß einer nicht dargestellten Rückstellfeder wieder in seine Ruhelage in dem Behälter 30 zurückgeschwenkt wird.

Das Reinigen von insbesondere endlosen Transportbändern mittels Abstreifern, z.B. auch im Form vom Reinigungswalzen, die gegenläufig zum Umtergurt rotieren, ist bereits bekannt. Auch die Reinigung von Antriebsriemem ist bekannt, wobei Putzbürsten verwendet werden, die jedoch in der Regel im Zusammenhang mit einer elektrostatischem Aufladung erwähnt sind. Die Borsten waren dabei zur elektrostatischen Ableitung vielfach aus Kupferdrähten hergestellt. Im Stande der Technik findet sich jedoch kein Hinweis über eine Reinigung vom Tangentialantriebsriemen vom insbesondere Textil-Vielstellenmaschinen erwähnt.

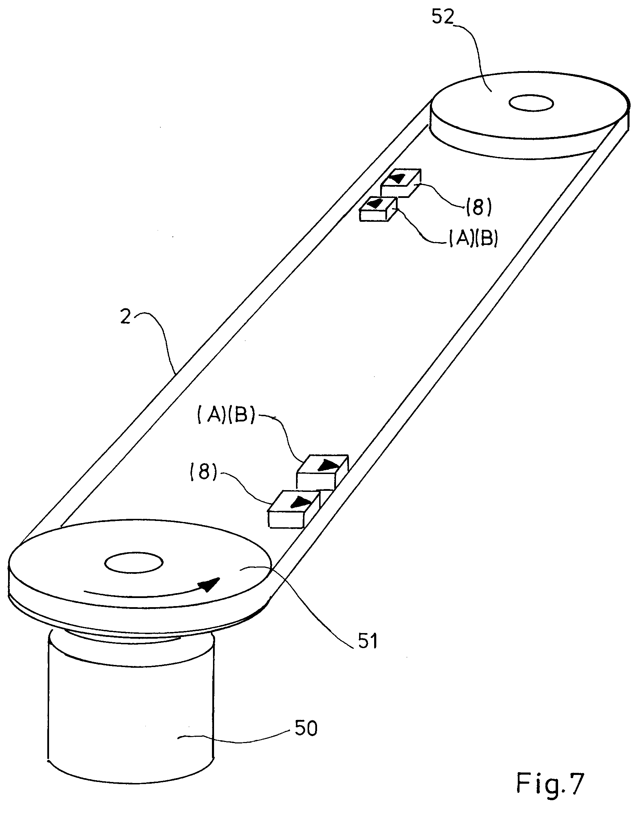

Fig. 7 zeigt, schematisiert dargestellt, einen Riemenantrieb, bestehend aus einer von einem Antriebsmotor 50 angetriebenen Antriebsscheibe 51 und einer Umlenkscheibe 52 und einen Flachriemen 2, der beidseitig zum Antrieb einer Vielzahl von nicht dargestellten Spindeln bzw. Spindelwirteln 4 im Sinne der Darstellung von Fig. 1 dient. Im Lauf- bzw. Drehrichtung der beiden Scheiben 51, 52 ist dem Flachriemen jeweils hinter der einzelnen Scheibe 51 bzw. 52 zuerst eine mechanische Reinigungseinrichtung 8 und unmittelbar hinter dieser eine Befeuchtungsvorrichtung A bzw. B zugeordnet.

## Patentansprüche

1. Verfahren zum Reinigen eines Riemenantriebs, der einer Textilmaschine, insbesondere Doppeldraht-Zwirnmaschine, zugeordnet ist und Spann- bzw. Riemenandruckrollen aufweist, dadurch gekenzeichnet, daß man bei laufendem Riemen (2) mindestens die über die Spann- oder Andruckrollen (6) laufende Riemenfläche mit einer Flüssigkeit befeuchtet.

2. Verfahren zum Reinigen eines Riemenantriebs, der einer Textilmaschine, insbesondere Doppeldraht-Zwirnmaschine, zugeordnet ist und Spann- bzw. Riemenandruckrollen aufweist, dadurch gekennzeichnet, daß bei laufenden Riemen (2) mindestens gegen die über die Spann- oder Andruckrollen (6) laufende Riemenfläche ein mechanisches Reinigungselement zur Anlage bringt.

3. Verfahren nach Anspruch 1 und 2, dadurch gekennzeichnet, daß man die Riemenfläche sowohl befeuchtet als auch mit einem mechanischen Reinigungselement reinigt.

4. Verfahren nach Anspruch 1 oder 3, dadurch gekennzeichnet, daß die Flüssigkeitsbefeuchtung intermittierend erfolgt.

5. Verfahren nach Anspruch 1 oder 3, dadurch gekennzeichnet, daß die Flüssigkeit auf dem Riemen, insbesondere Flachriemen, aufgesprüht wird.

6. Verfahren nach Anspruch 1 oder 3, dadurch gekennzeichnet, daß man ein Kissen (36) aus saugfähigem Material in eine Flüssigkeit eintaucht und dann gegen den Riemen (2) zur Anlage bringt.

7. Verfahren nach Anspruch 2 oder 3, dadurch gekennzeichnet, daß man als Reinigungselement eine durch den Flachriemen antreibbare Bürste verwendet.

8. Verfahren nach Anspruch 2 oder 3, dadurch gekennzeichnet, daß man als Reinigungselement eine von außen rotierend antreibbare Bürste (8) verwendet.

9. Verfahren nach Anspruch 3, dadurch gekennzeichnet, daß das mechanische Reinigungselement (8) mit der Befeuchrungseinrichtung (A; B) kombiniert ist.

10. Einrichtung zum Reinigen des Spann- bzw. Riemenandruckrollen aufweisenden Riemenantriebs einer Textilmaschine, insbesondere Doppeldraht-Zwirnmaschine, dadurch gekennzeichnet, daß sie eine Vorrichtung (A;B) zum Befeuchten mindestens der über die Spann- bzw. Andruckrollen (6) laufenden Fläche des Riemens (2) enthält.

11. Einrichtung zum Reinigen des Spann- bzw. Riemenandruckrollen aufweisenden Riemenantriebs einer Textilmaschine, insbesondere Doppeldraht-Zwirnmaschine, dadurch gekennzeichnet, daß sie ein gegen den Riemen (2) anliegendes mechanisches Reinigungselement (8) enthält.

12. Einrichtung nach Anspruch 1 und 2, dadurch gekennzeichnet, daß sie eine Befeuchtungseinrichtung (A;B) und ein mechanisches Reinigungselement enthält.

13. Einrichtung nach Anspruch 10 oder 12, dadurch gekennzeichnet, daß die Befeuchtungsvorrichtung (A) ein intermittierend wirkendes Sprühaggregat (23) ist.

14. Einrichtung nach Anspruch 10 oder 12, dadurch gekennzeichnet, daß die Befeuchtungsvorrichtung (A) einen teilweise durche eine Membran (17) begrenzten Flüssigkeitsbehälter (18) umfaßt, in den ein mittels eines Rückschlagsventils (19) verschließbarer Flüssigkeitseinlaß (20) mündet und an den eine ventilgesteuerte Sprühdüse (23) angeschlossen ist, derart, daß durch Eindrücken der Membran (17) im den Flüssigkeitsbehälter (18) einerseits das Rückschlagventil (19) den Flüssikeitseinlaß (20) verschließt und andererseits ein Ventil (25) der Sprühdüse (23) geöffnet wird.

15. Einrichtung mach Anspruch 10 oder 12, dadurch gekennzeichnet, daß die Befeuchtungsvorrichtung (B) einem Flüssigkeitsbehälter (30) und ein Kissen (36) aus saugfähigem Material enthält, das einerseits in den Flüssigkeitsbehälter (30) eintauchbar und andererseits gegen den Riemen, insbesondere Flachriemen (2), zur Anlage bringbar ist.

16. Einrichtung nach Anspruch 11 oder 12, dadurch gekennzeichnet, daß das Reinigungselement eine durch den Riemen (2) antreibbare Bürste (8) ist.

17. Einrichtung nach Anspruch 11 oder 12, dadurch gekennzeichnet, daß das Reinigungselement eine von außen rotierend antreibbare Bürste (8) ist.

18. Einrichtung nach Anspruch 11 oder 12, dadurch gekennzeichnet, daß dem mechanischen Reinigungselement (8) eine Absaugevorrichtung (12) zum Absaugen vom von dem Riemen (2) lösgelösten Staub- bzw. Schmutzpartikeln zugeordnet ist.

19. Einrichten nach Anspruch 12, dadurch gekennzeichnet, daß die Befeuchtungsvorrichtung (A) und das mechanische Reinigundselement (8) ineinander integriert sind.
